# FASCICULE DE BREVET EUROPEEN

(11) **EP 2 434 275 B1**
(45) Date de publication et mention de la délivrance du brevet: **28.12.2016**
(21) Numéro de dépôt: 11306147.7
(22) Date de dépôt: 14.09.2011
(51) Int. Cl.: G01N 21/67, G01N 21/68

(54) **Procédé de mesure par spectrométrie de décharge luminescente d'un échantillon solide organique ou polymère**
Verfahren zur Messung einer organischen Feststoff-Probe oder einer Poymerfeststoffprobe mittels Glimmentladungsspektrometrie
Method of measuring a solid organic or polymer sample by luminescent discharge spectrometry

(30) Priorité: 24.09.2010 FR 1057722
(43) Date de publication de la demande: 28.03.2012
(73) Titulaire: Horiba Jobin Yvon S.A.S., 91160 Longjumeau (FR)
(72) Inventeur: Chapon, Patrick, 91440 Villebon Sur Yvette (FR); Tempez, Agnès, 91300 Massy (FR); Olivero, Célia, 91160 Longjumeau (FR); Nakamura, Tatsuhito, Kanagawa 212-0007 (JP); Nakamura, Hiroko, Kanagawa 212-0007 (JP); Fujimoto, Akira, Tokyo 154-0021 (JP)
(74) Mandataire: Chauvin, Vincent

(56) Documents cités:
- EP-A- 0 448 061
- WO-A1-2009/130424
- FR-A1- 2 942 071
- US-B1- 6 900 139
- YAMAKAWA KOJI ET AL: "Ultrahigh-speed etching of organic films using microwave-excited nonequilibrium atmospheric-pressure plasma", JOURNAL OF APPLIED PHYSICS, AMERICAN INSTITUTE OF PHYSICS. NEW YORK, US, vol. 98, no. 4, 25 août 2005 (2005-08-25), pages 43311-043311, XP012078359, ISSN: 0021-8979
- JEONG J Y ET AL: "Etching polyimide with a nonequilibrium atmospheric-pressure plasma jet", JOURNAL OF VACUUM SCIENCE AND TECHNOLOGY: PART A, AVS /AIP, MELVILLE, NY., US, vol. 17, no. 5, 1 septembre 1999 (1999-09-01), pages 2581-2585, XP012004749, ISSN: 0734-2101, DOI: DOI:10.1116/1.581999
- TUCCITTO N ET AL: "Pulsed radiofrequency glow discharge time-of-flight mass spectrometry for molecular depth profiling of polymer-based films", RAPID COMMUNICATIONS IN MASS SPECTROMETRY JOHN WILEY & SONS LTD. UK, vol. 23, no. 5, 15 mars 2009 (2009-03-15), pages 549-556, XP002623053, ISSN: 0951-4198
- LOBO L ET AL: "Polymer screening by radiofrequency glow discharge time-of-flight mass spectrometry", ANALYTICAL AND BIOANALYTICAL CHEMISTRY, SPRINGER, BERLIN, DE, vol. 396, no. 8, 9 février 2010 (2010-02-09), pages 2863-2869, XP019798706, ISSN: 1618-2650
- JULIEN MALHERBE ET AL: 'In-depth profile analysis of oxide films by radiofrequency glow discharge optical emission spectrometry (rf-GD-OES): possibilities of depth-resolved solid-state speciation' JOURNAL OF ANALYTICAL ATOMIC SPECTROMETRY vol. 23, no. 10, 01 Janvier 2008, pages 1378 - 1387, XP055286134 DOI: 10.1039/b803713b ISSN: 0267-9477
- MARTÍN A ET AL: "Modifying argon glow discharges by hydrogen addition: effects on analytical characteristics of optical emission and mass spectrometry detection modes", ANALYTICAL AND BIOANALYTICAL CHEMISTRY, SPRINGER, BERLIN, DE, vol. 388, no. 8, 28 April 2007 (2007-04-28), pages 1573-1582, XP019537480, ISSN: 1618-2650, DOI: 10.1007/S00216-007-1291-2

## Description

La présente invention concerne un procédé de mesure d'un échantillon de type organique ou polymère par spectrométrie de décharge luminescente.

La spectrométrie de décharge luminescente est une technique d'analyse élémentaire et/ou moléculaire des solides qui permet de mesurer la composition chimique élémentaire de matériaux ou d'empilements de couches minces, cette analyse pouvant être résolue en profondeur.

Dans un spectromètre à décharge luminescente, un échantillon à analyser est exposé à un plasma de gravure qui effectue une ablation de surface. Par ailleurs, le plasma assure, via différents mécanismes physico-chimiques, l'excitation et l'ionisation des espèces érodées. Le suivi des espèces présentes dans le plasma, respectivement par un spectromètre optique pour les espèces excitées et/ou par un spectromètre de masse pour les espèces ionisées permet ainsi de mesurer la composition chimique élémentaire et la spéciation de la forme chimique des éléments détectés.

De plus, une exposition prolongée de l'échantillon au plasma d'ablation produit un cratère d'érosion en profondeur. Une analyse du plasma en fonction de la durée d'ablation peut permettre de déterminer la composition de l'échantillon résolue en profondeur lorsque l'érosion se produit en creusant uniformément l'échantillon, c'est-à-dire quand le cratère d'ablation a un fond plat et des flancs perpendiculaires au fond. La spectrométrie de décharge luminescente peut ainsi permettre d'obtenir le profil de la composition chimique de matériaux épais ou en couches minces en fonction de la profondeur d'érosion (de quelques dizaines de nanomètres à quelques dizaines de microns d'épaisseur) avec une résolution submicrométrique.

Initialement limitée aux matériaux et aux couches conductrices du fait de l'utilisation de sources à courant continu (DC), la spectrométrie de décharge luminescente permet désormais l'analyse de matériaux semi-conducteurs et d'isolants grâce à l'utilisation de sources radio-fréquence (RF).

Les spectromètres de décharge luminescente donnent de bons résultats en particulier pour les échantillons sur support conducteur ou semi-conducteur (par ex. silicium), qui permettent un bon couplage du champ électrique dans le plasma. Par contre, dans le cas d'un échantillon sur substrat isolant ou comprenant des couches organiques ou polymères, le plasma produit un échauffement de l'échantillon qui peut entraîner sa destruction. De plus, les flancs du cratère d'érosion sont généralement très inclinés par rapport à la surface de l'échantillon, ce qui nuit à la résolution en profondeur.

Pour former un plasma, on utilise généralement comme gaz porteur un gaz rare pur. L'argon est le gaz rare le plus utilisé en spectrométrie de décharge luminescente pour plusieurs raisons : les ions argon sont des agents d'ablation efficaces et les niveaux d'énergie dans un plasma d'argon sont suffisants pour ioniser la majorité des éléments du tableau périodique. De plus, l'argon n'interfère pas avec les espèces excitées ou ionisées du plasma et ne perturbe pas les mesures spectrométriques. L'utilisation d'argon pur à 99,9995 % permet ainsi d'éviter des recombinaisons dans le plasma entre le gaz porteur et les espèces érodées provenant de la surface de l'échantillon.

Toutefois, un plasma d'argon ne permet pas d'exciter efficacement certains éléments, comme par exemple les éléments fluor ou des éléments non-métalliques.

D'autres gaz rares que l'argon peuvent aussi être utilisés, comme le néon ou l'hélium, dans le but d'augmenter les raies d'émission ioniques (en spectrométrie de masse) ou atomiques (en spectrométrie optique) de certains éléments. L'utilisation de néon permet notamment d'augmenter l'émission atomique de la ligne du fluor, que l'argon ne parvient pas à exciter. Par contre, un plasma de néon ou d'hélium ne permet pas d'éroder aussi efficacement qu'un plasma d'argon : la vitesse de gravure maximum est obtenue avec un plasma d'argon pur, aussi bien pour un échantillon de type verre ou métal.

Différents mélanges gazeux ont également été expérimentés pour diverses applications de spectrométrie de décharge luminescente.

Premièrement, un mélange d'argon et d'un autre gaz rare a été testé. La publication Hartenstein et al. (J. Anal. At. Spectrom., 1999, 14, pp. 1039-1048), évalue les effets de l'utilisation d'un mélange d'argon et d'hélium dans une source de décharge luminescente RF pour l'analyse par spectrométrie de décharge luminescente de solides de type métaux ou verres. Le mélange d'argon et d'hélium permet d'augmenter l'intensité de certaines raies d'émission atomique. En particulier, un mélange d'hélium et d'argon a été mentionné pour augmenter l'efficacité d'ionisation lors de l'analyse de verres. Cependant, selon la publication Hartenstein *et al.*, l'adjonction d'hélium à de l'argon ne permet pas d'atteindre la vitesse maximum de gravure obtenue avec un plasma d'argon pur, que ce soit pour un échantillon de type verre ou métal.

Deuxièmement, plusieurs groupes ont essayé un mélange d'argon et d'un gaz moléculaire. Toutefois, les phénomènes de collision et de rayonnement se produisant dans un plasma en présence d'un mélange de gaz et les interactions avec la surface de l'échantillon sont extrêmement complexes et ne sont pas encore compris totalement.

La publication A. Martin et al. (« Modifying argon glow discharges by hydrogen addition : effects on analytical characteristics of optical émission and mass spectrometry detection modes », Anal. Bioanal. Chem, 2007, 388 :1573-1582) passe en revue différentes études sur les effets de l'ajout d'hydrogène à de l'argon en spectrométrie de décharge luminescente. L'ajout d'une faible quantité d'hydrogène (1-10%) dans un plasma d'argon produit généralement une augmentation des rendements d'ionisation, critique en spectrométrie de masse. Cependant, en spectrométrie d'émission optique, les espèces hydrogénées induisent des bandes d'émission qui peuvent interférer avec les raies d'éléments atomiques ou ionisés de l'échantillon et modifier considérablement l'analyse quantitative de l'intensité des raies. De plus, l'hydrogène affecte négativement la vitesse de gravure pour des échantillons métalliques.

De l'oxygène peut être présent dans un spectromètre de décharge luminescente, soit comme impureté dans le gaz rare porteur, soit comme sous-produit de la gravure de matériaux contenant de l'oxygène, soit encore comme composant d'un mélange gazeux formant le gaz porteur. La présence d'oxygène dans un spectromètre de décharge luminescente est généralement considérée comme une impureté génératrice de raies spectrales parasites, qui se superposent aux raies d'émission recherchées de l'échantillon, comme par exemple les raies OH.

Certains auteurs ont évalué les effets de l'ajout volontaire d'oxygène gazeux à un gaz rare pour modifier les conditions de la décharge luminescente.

La publication A. Bogaerts (« Effects of oxygen addition to argon glow discharges : A hybrid Monte Carlo-fluid modeling investigation ») concerne une modélisation théorique des effets de l'ajout d'un gaz moléculaire d'hydrogène H₂, d'azote N₂ ou d'oxygène O₂ à de l'argon dans un appareil de spectrométrie de décharge luminescente de type continu (dc-GDS). Selon cette publication, l'ajout de 0,05 à 5% d'oxygène produit une diminution de la densité en espèces excitées métastables de type Arₘ* et une réduction de la densité d'atomes érodés, même pour de faibles concentrations en oxygène. Cette réduction de la vitesse de gravure en présence d'oxygène gazeux est attribuée à la formation d'une couche d'oxyde sur la cathode du spectromètre de décharge luminescente, qui s'accompagne aussi d'une réduction de l'intensité des raies d'émission.

D'autre part, l'article de Fernandez et al. (« Investigations of the effects of hydrogen, nitrogen or oxygen on the in-depth profile analysis by radiofrequency argon glow discharge-optical emission spectrometry », J. Anal. AT. Spectrom. 2003, 18, 151-156) a analysé les effets d'un mélange d'argon et d'oxygène (0.5-10% v/v) en SDL radio-fréquence et constate également une réduction drastique de la vitesse de gravure aussi bien pour des échantillons de type métallique ou verre, qui limite l'analyse SDL à des couches de quelques nanomètres d'épaisseur.

Jusqu'à présent, l'analyse d'échantillons organiques par spectrométrie de décharge luminescente pose différents problèmes. Dans un appareil de GDS classique à détection optique et utilisant un plasma d'Argon pur, la vitesse d'érosion est de plusieurs microns/minute pour des échantillons de type métallique tandis qu'elle est généralement inférieure à 20nm/minute pour des échantillons ou des couches organiques. Cette faible vitesse d'érosion rend très difficile l'analyse d'échantillons ou de films organiques épais. D'autre part, la mauvaise uniformité de gravure obtenue sur des échantillons organiques ne permet pas une résolution en profondeur pour analyser des surfaces ou des couches minces enfouies sous une couche de matériau organique épais (plusieurs microns à plusieurs dizaines de microns d'épaisseur). Enfin, les nombreuses espèces chimiques provenant de l'érosion de l'échantillon (par exemple des raies d'émission moléculaire de type CH, OH, NH ou CO) sont susceptibles d'interférer avec le(s) gaz porteur(s) du plasma et ainsi de réduire les signaux détectés et de perturber l'analyse quantitative par spectrométrie de décharge luminescente.

On ne dispose pas de procédé d'analyse d'échantillons solides organiques ou polymères (ou contenant des couches polymères ou organiques) par spectrométrie de décharge luminescente permettant à la fois d'augmenter la vitesse de gravure, l'uniformité de gravure, tout en accroissant l'intensité des raies (en spectrométrie d'émission optique) et/ou les rendements d'ionisation (en spectrométrie de masse) de manière à améliorer le rapport signal sur bruit des signaux détectés.

FR-A1-2 942 071 divulgue une lampe à décharge pour spectrométrie de décharge luminescente (ou GDS pour Glow Discharge Spectrometer) qui permet d'analyser la composition chimique d'un échantillon soumis à un plasma. Le plasma crée une ablation en surface de l'échantillon. Un spectromètre de masse et/ou un spectromètre optique est utilisé pour identifier et quantifier les éléments chimiques incorporés dans le plasma lors de l'ablation, permettant ainsi l'analyse précise de matériaux épais ou en couches minces. Une analyse du plasma en fonction de la durée d'ablation peut permettre de déterminer la composition de l'échantillon résolue en profondeur lorsque l'érosion se produit. Dans un appareil de GDS, le plasma est obtenu par application d'un champ électrique (continu (DC), radiofréquence (RF), éventuellement pulsé) dans une lampe à décharge comprenant une enceinte contenant un gaz neutre (Argon par exemple).

La présente invention a pour but de remédier à ces inconvénients et concerne plus particulièrement un procédé de mesure par spectrométrie de décharge luminescente de la composition chimique élémentaire et/ou moléculaire d'un échantillon solide comprenant au moins une couche de matériau organique selon la revendication 1 annexée.

Selon un mode de réalisation particulier du procédé de l'invention, l'échantillon à mesurer comprenant un empilement de couches minces, on modifie la concentration en oxygène du mélange gazeux au cours de l'exposition au plasma de décharge luminescente en fonction de la couche de l'empilement exposée audit plasma.

Selon un mode de réalisation particulier, le procédé de l'invention comprend l'application simultanée d'un champ électrique radiofréquence et d'un champ magnétique axial ou transverse par rapport à un axe de la lampe à décharge.

Selon un mode de réalisation préféré de l'invention, ledit procédé comprend en outre une étape d'étalonnage selon laquelle:
- on place un échantillon organique de composition connue dans la lampe à décharge luminescente,
- on injecte dans la lampe à décharge un mélange gazeux comprenant au moins un gaz rare et de l'oxygène gazeux, la concentration en oxygène gazeux étant comprise entre 1% et 10% massique du mélange gazeux, on applique une décharge électrique de type radiofréquence aux électrodes de ladite lampe à décharge pour générer un plasma de décharge luminescente, et on expose ledit échantillon organique de composition connue audit plasma ;
- on mesure par spectrométrie au moins un signal représentatif d'une espèce ionisée et/ou d'une espèce excitée dudit plasma ;
- on étalonne la mesure par spectrométrie relativement à la composition connue dudit échantillon organique.

L'invention concerne aussi l'application du procédé selon l'un des modes de réalisation de l'invention à un échantillon comprenant au moins une couche de matériau organique de type polymère.

Selon un mode de réalisation particulier, l'invention concerne l'application du procédé selon un des modes de réalisation à un échantillon comprenant au moins une couche de matériau polymère organique de type polyéthylène téréphthalate.

Cette description, donnée à titre d'exemple non limitatif, fera mieux comprendre comment l'invention peut être réalisée en référence aux dessins annexés sur lesquels :
- la figure 1 représente schématiquement un spectromètre de décharge luminescente équipé d'un système de mélange de gaz ;
- la figure 2 représente schématiquement une vue en coupe d'un premier échantillon ;
- la figure 3 illustre une mesure par rf-SDL de l'échantillon représenté sur la figure 2 en fonction du temps d'exposition à un plasma classique d'argon pur ;
- la figure 4 illustre une mesure par rf-SDL d'un l'échantillon représenté schématiquement sur la figure 2 en fonction du temps d'exposition à un plasma dans un mélange d'argon et d'oxygène ;
- la figure 5 représente schématiquement une vue en coupe d'un second échantillon multi-couches ;
- la figure 6 illustre une mesure par rf-SDL de l'échantillon représenté sur la figure 5 en fonction du temps d'exposition à un plasma formé à partir d'un mélange d'argon et d'oxygène.

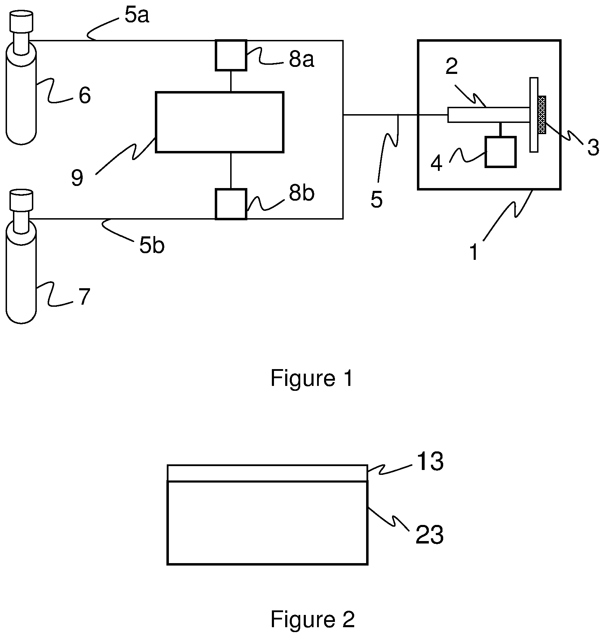

La figure 1 représente schématiquement un spectromètre de décharge luminescente 1 équipé d'un système d'alimentation en gaz porteur de la décharge plasma. Le spectromètre de décharge luminescente 1 comprend une lampe à décharge 2 généralement en forme de tube à l'intérieur duquel est confiné le plasma. Le système de pompage des gaz n'est pas représenté sur le schéma de la figure 1. Le spectromètre de décharge luminescente 1 comprend un spectromètre 4, qui peut être un spectromètre optique, pour l'analyse d'émission optique (OES) des espèces excitées du plasma, et/ou un spectromètre de masse (MS), pour l'analyse des espèces ionisées du plasma ou encore un spectromètre de masse à temps de vol (TOF-MS).

Une ligne 5 d'alimentation en gaz porteur relie une ou plusieurs sources de gaz à la lampe à décharge 2. Dans l'exemple représenté sur la figure 1, la ligne d'alimentation en gaz 5 est divisée en deux lignes d'alimentation 5a et 5b reliées respectivement à une première source de gaz 6 et une seconde source de gaz 7. La première source de gaz 6 est par exemple une bouteille comprenant un mélange d'argon et d'oxygène (à 4% d'O₂). La seconde source de gaz 7 est une bouteille d'argon pur. Un premier débitmètre 8a permet d'ajuster le débit de gaz sur la ligne 5a provenant de la première source de gaz 6 et dirigée vers la ligne d'alimentation en gaz 5 de la lampe à décharge 2. Un second débitmètre 8b permet d'ajuster le débit de gaz sur la ligne 5b provenant de la seconde source de gaz 7 et dirigé vers la ligne d'alimentation en gaz 5 de la lampe à décharge 2. Un contrôleur 9 permet d'ajuster les commandes des débitmètres 8a et 8b de manière à obtenir la concentration souhaitée du mélange gazeux injecté via la ligne 5 dans la lampe à décharge.

La figure 2 représente schématiquement une vue en coupe d'un premier échantillon comprenant un empilement multicouches 23 recouvert d'une couche organique 13 (par exemple une tôle métallique peinte, comprenant une plaque d'acier passivé par une première couche de zinc, recouverte par une seconde couche de peinture de type organométallique comprenant de l'aluminium et enfin par une troisième couche de vernis d'environ 20 à 30 microns d'épaisseur).

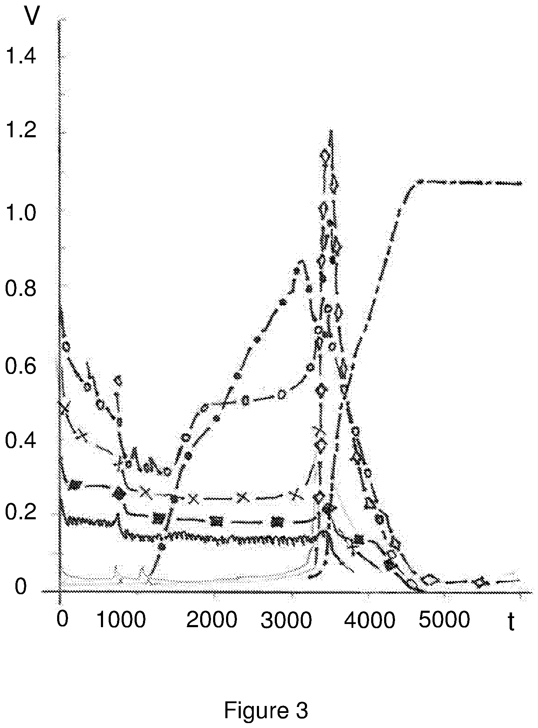

La figure 3 représente une mesure par spectrométrie optique de décharge luminescente pour un échantillon tel que représenté sur la figure 2, le gaz porteur étant de l'argon pur. La figure 3 trace plusieurs courbes d'intensité d'émission optique en fonction du temps t d'exposition au plasma en secondes, l'axe des ordonnées étant représenté ici en unités arbitraires. Chaque courbe correspond respectivement à un élément chimique en fonction du temps d'exposition au plasma d'argon, c'est-à-dire en fonction de la profondeur du cratère d'érosion dans l'échantillon. On détecte notamment les éléments suivants : C (courbe représentée -o-), O (courbe représentée -x-), N (en trait continu), *Al (courbe représentée -•-), Zn1 (courbe -0-), Fe (en trait tiretés), H (courbe -■-) et Ca (non représenté sur la figure 3). On observe la présence des signaux représentatifs de plusieurs couches successives de compositions différentes, ainsi que les interfaces entre les différentes couches. La première couche érodée comprend essentiellement des éléments organiques : C, O, N et H. La seconde couche érodée comprend principalement de l'aluminium, ainsi que des éléments C, O, N et H. Une troisième couche comprend les éléments Zn1, Al et Ca. Enfin, la dernière couche érodée comprend essentiellement du fer. Sur la figure 3, les signaux mesurés permettent l'analyse quantitative des éléments prépondérants de l'échantillon. Toutefois, le rapport signal sur bruit est important sur certaines courbes et dans la zone de faible intensité des signaux et la mesure des éléments en faible concentration tel que Ca est difficile compte tenu du bruit observé.

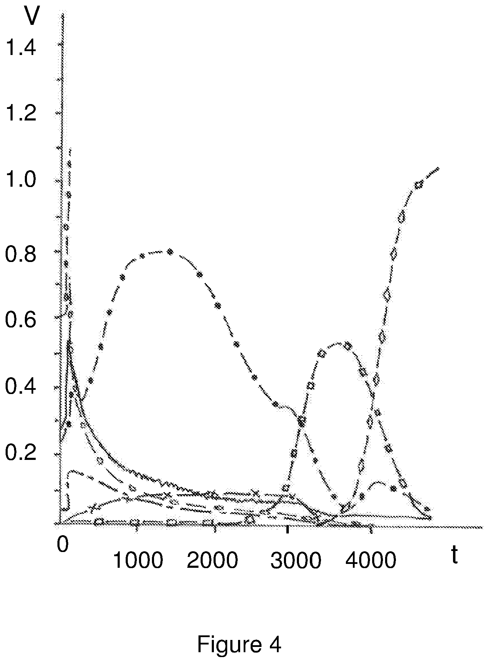

La figure 4 représente une mesure par spectrométrie optique de décharge luminescente pour un même échantillon tel que représenté schématiquement figure 2, le gaz porteur étant un mélange d'argon et d'oxygène, la concentration en oxygène étant de 4% et les autres conditions du plasma étant par ailleurs égales à celles utilisées pour la figure 3. De manière analogue à la figure 3, la figure 4 représente plusieurs courbes d'intensités d'émission optique en fonction du temps t d'exposition au plasma en secondes, l'axe des ordonnées étant représenté en unités arbitraires. Chaque courbe de la figure 4 correspond respectivement à la mesure d'un élément chimique en fonction du temps d'exposition au plasma, *ie* de la profondeur du cratère d'érosion dans l'échantillon. On détecte les mêmes éléments chimiques que sur la figure 3, à savoir les éléments : C (courbe représentée -o-), O (courbe représentée - x-), N (en trait continu), *Al (courbe représentée -•-), Fe (courbe -0-), H (en trait tiretés) et Zn2 (-□-). Cependant, l'intensité et la forme des courbes de la figure 4 sont différentes de l'intensité et de la forme des courbes de la figure 3. Toutefois, les signaux mesurés sont beaucoup plus clairs sur la figure 4 comparés à ceux de la figure 3. On détecte notamment la présence d'une interface comprenant l'élément Ca (non représenté sur la figure 4) située entre la couche comprenant principalement de l'aluminium et la couche comprenant principalement l'élément Zn.

En comparant les figures 3 et 4, on constate une amélioration notable du rapport signal sur bruit de toutes les espèces détectées lors de l'utilisation d'un mélange gazeux argon et oxygène par rapport à un plasma d'argon pur. La mesure des éléments en faible concentration présente un rapport signal sur bruit nettement amélioré comparé à la figure 3. La mesure de SDL au moyen d'un plasma en présence d'un mélange gazeux d'argon et d'oxygène permet ainsi une analyse plus précise et avec une meilleure résolution en profondeur des couches successives de compositions différentes de l'échantillon comprenant au moins une couche organique.

Contrairement à ce qui avait été observé jusqu'à présent sur des échantillons de type métal ou verre, le plasma RF en présence d'un mélange argon et oxygène produit une augmentation de la vitesse de gravure de la couche organique qui peut atteindre plusieurs microns/minute pour certains matériaux organiques, alors que la vitesse de gravure sous argon pur est limitée à environ 20nm/minute. La raison en est probablement qu'un processus chimique de dissociation de la surface du matériau en regard du plasma se combine au processus physique d'érosion.

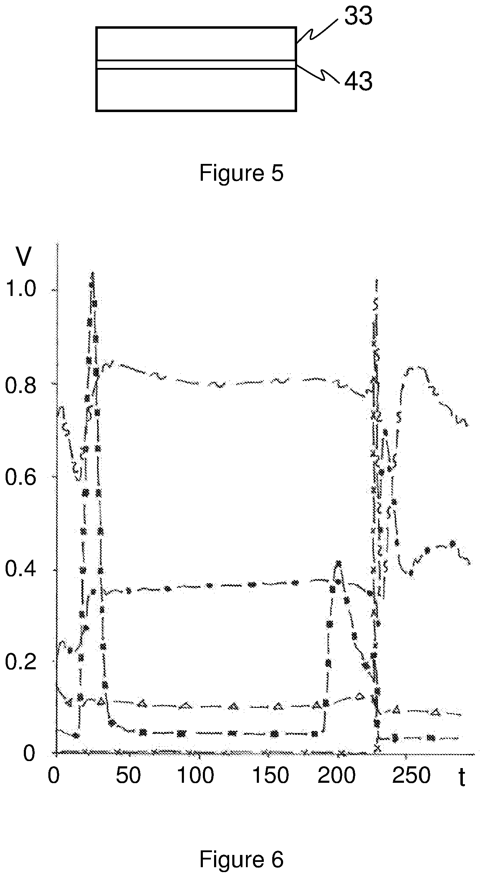

La figure 5 représente schématiquement une vue en coupe d'un second échantillon multicouches comprenant une couche 33 de polymère de type polyéthylène téréphthalate (ou PET) de 50 microns d'épaisseur, sous laquelle est enfouie une couche mince métallique 43 d'épaisseur inférieure à 1 micron, elle-même déposée sur un substrat.

En spectrométrie de décharge luminescente radio-fréquence classique, avec un plasma d'argon pur, il n'est en pratique pas possible d'analyser en profondeur un échantillon tel que représenté sur la figure 5. En effet, il n'est pas possible d'atteindre la couche 43 enfouie sous la couche épaisse 33 de PET, car la vitesse d'érosion du plasma d'argon sur le PET est excessivement faible : environ 10 nm par minute.

La figure 6 représente une mesure par spectrométrie optique de décharge luminescente pour un échantillon tel que représenté sur la figure 5, le gaz porteur étant un mélange d'argon et d'oxygène, la concentration en oxygène étant d'environ 4%. Plus précisément, la figure 6 représente plusieurs courbes d'intensités d'émission optique en fonction du temps t d'exposition au plasma en secondes, l'axe des ordonnées étant représenté en unités arbitraires. Chaque courbe de la figure 6 correspond respectivement à la mesure d'un élément chimique en fonction du temps d'exposition au plasma, *ie* de la profondeur du cratère d'érosion dans l'échantillon. On détecte les éléments chimiques suivants : *In/100 (courbe représentée -x-), *O (courbe représentée -•-), *C (courbe représentée - ∼ -), *H (courbe représentée -Δ-) et *Al (courbe -■-). On détecte tout d'abord les éléments C, O et H pendant les vingt premières secondes du plasma puis un pic d'émission correspondant à de l'aluminium entre vingt et quarante secondes. Entre environ 40s et 190s, on détecte essentiellement les éléments *C, *O et *H. Entre 190s et 230s apparaît un pic correspondant à la détection d'aluminium. Autour de 230s, apparaissent des pics très intenses correspondant à des éléments métalliques *Au/10 (non représentée sur la figure 6), *In/100 et *Sn/10 (non représentée sur la figure 6). Après environ 240s, les éléments *C, *O et *H redeviennent prépondérants.

On déduit des mesures de la figure 6 que la vitesse de gravure de la couche épaisse 33 de PET est extrêmement rapide, puisqu'on atteint la couche métallique 43 enfouie en quelques minutes seulement (environ 230 s. sur la figure 6), soit une vitesse de gravure d'environ 12.5 microns/minute. De plus, les signaux mesurés permettent de détecter la couche 43 enfouie avec une excellente résolution en profondeur. La présence et la composition de la couche 43 enfouie sont confirmées par une analyse en coupe de l'échantillon par spectroscopie à dispersion d'énergie (EDS).

Le procédé de l'invention permet de nouvelles applications pour l'analyse résolue en profondeur d'échantillons de type polymères, de couches polymères ou de dépôts organiques soit en volume ou sous forme de couches minces ou d'empilements de couches minces avec une excellente résolution en profondeur (mieux que 1µm) et/ou sur des épaisseurs importantes (plusieurs dizaines de microns).

Le procédé de l'invention est compatible avec un appareil classique de spectrométrie de décharge luminescente pourvu qu'il soit de type radio-fréquence (RF-SDL) et non de type continu (DC-SDL). On peut utiliser une bouteille 6 de mélange gazeux prête à l'emploi, à la place d'une bouteille de gaz rare pur. De manière alternative, on peut effectuer le mélange des gaz (gaz rare et oxygène) à l'intérieur ou à l'extérieur de l'appareil de spectrométrie de décharge luminescente. L'oxygène gazeux étant un gaz dangereux dans certaines conditions d'utilisation, il est cependant préférable d'utiliser un branchement de lignes de gaz fournissant d'une part un gaz rare pur et d'autre part un mélange de gaz rare et d'oxygène en faible concentration. Il est possible de modifier la concentration en oxygène dans le mélange de gaz de préférence entre 1% et 10%. Cette modification peut être effectuée par des vannes à commandes manuelles ou électro-commandées.

Les exemples de mesure représentés sur les figures 3, 4 et 6 sont des mesures spectrométrie d'émission optique. Toutefois, le procédé concerne également des mesures par spectrométrie de masse pour la détection des espèces ionisées du plasma.

Selon le mode de réalisation préféré, l'utilisation de débitmètres massiques et d'un contrôleur de pression sur les deux lignes de gaz 5a, 5b permet l'ajustement de la concentration en oxygène du mélange gazeux. Différentes optimisations du procédé sont dès lors envisageables. Il est possible de déterminer, par une procédure d'essais, la concentration optimum en oxygène dans le mélange pour un type d'échantillon donné. Il est également possible d'ajuster en temps réel la concentration en oxygène dans le mélange gazeux au cours de la gravure d'un échantillon multi-couches, notamment selon la composition des différentes couches d'un empilement multicouches. La décharge peut éventuellement être interrompue pour permettre de stabiliser la composition du mélange gazeux lorsqu'une interface est détectée.

De nombreuses variantes du procédé de l'invention sont envisageables.

Une première variante comprend l'application d'une décharge électrique radio-fréquence de type pulsée, de manière à éviter l'échauffement des échantillons les plus fragiles.

Une autre variante consiste à appliquer simultanément pendant la décharge plasma RF (pulsée ou non) un champ magnétique, axial ou transverse relativement à l'axe de la lampe à décharge, pour améliorer notamment l'uniformité de gravure.

Le procédé de l'invention s'applique avantageusement à des échantillons comprenant une ou plusieurs couches organiques ou polymères tels que par exemple des tôles métalliques pour l'automobile, échantillons photovoltaïques organiques, électronique organique, échantillons multicouches hybrides - métal/verre/organique etc.

Le procédé de l'invention peut également permettre de préparer la surface d'un échantillon solide organique ou polymère pour l'imagerie par microscopie électronique. En effet, l'exposition de la surface de ladite couche de matériau organique à un plasma de décharge luminescente de type radio-fréquence en présence d'un mélange gazeux comprenant au moins un gaz rare et de l'oxygène gazeux, préalablement à l'imagerie de l'échantillon dans un microscope électronique à balayage permet avantageusement d'augmenter le contraste de l'image de la surface de ladite couche de matériau organique.

Le procédé de l'invention permet l'analyse d'échantillons solides organiques ou polymères (ou contenant des couches polymères ou organiques) par spectrométrie de décharge luminescente. Le procédé de l'invention permet d'augmenter la vitesse de gravure notamment pour les matériaux organiques ou polymères, tout en assurant une excellente uniformité de gravure. De plus, les mesures par spectrométrie de décharge luminescente offrent une amélioration du rapport signal sur bruit, comparés aux procédés de l'art antérieur pour des échantillons solides organiques ou polymères.

## Revendications

1. Procédé de mesure par spectrométrie de décharge luminescente de la composition chimique élémentaire et/ou moléculaire d'un échantillon solide (3) comprenant au moins une couche de matériau organique (13, 33), comprenant les étapes suivantes :
- on place ledit échantillon (3) dans une lampe à décharge luminescente (2) en forme de tube,
- on injecte dans la lampe à décharge (2) un mélange gazeux comprenant au moins un gaz rare et de l'oxygène gazeux, la concentration en oxygène gazeux étant comprise entre 1% et 10% massique du mélange gazeux, on applique une décharge électrique de type radio-fréquence aux électrodes de ladite lampe à décharge pour générer un plasma de décharge luminescente, le plasma étant confiné à l'intérieur du tube de ladite lampe à décharge, et on expose ladite couche de matériau organique audit plasma de manière à obtenir un cratère d'érosion en profondeur et une vitesse de gravure de la couche organique supérieure à la vitesse de gravure produite par un plasma de décharge luminescente en présence dudit gaz rare sans oxygène ;
- on mesure la composition chimique élémentaire et/ou moléculaire de ladite au moins une couche de matériau organique (13, 33) de l'échantillon (3) en fonction de la profondeur d'érosion dans la couche de matériau organique (13, 33) avec une résolution en profondeur submicronique au moyen d'un spectromètre (4) d'émission optique ou d'un spectromètre (4) de masse, le spectromètre (4) utilisant au moins un signal représentatif d'une espèce ionisée et/ou d'une espèce excitée dudit plasma confiné à l'intérieur du tube de la lampe à décharge luminescente (2).

2. Procédé de mesure par spectrométrie de décharge luminescente selon la revendication 1 **caractérisé en ce que** le au moins un gaz rare est choisi parmi de l'argon, du néon, de l'hélium ou un mélange desdits gaz rares.

3. Procédé de mesure par spectrométrie de décharge luminescente selon l'une des revendications 1 à 2 **caractérisé en ce qu'**on applique une décharge électrique de type radio-fréquence pulsée.

4. Procédé de mesure par spectrométrie de décharge luminescente selon l'une des revendications 1 à 3 **caractérisé en ce qu'**on mesure au moins un signal représentatif d'une espèce ionisée dudit plasma au moyen d'un spectromètre de masse.

5. Procédé de mesure par spectrométrie de décharge luminescente selon l'une des revendications 1 à 4 **caractérisé en ce qu'**on mesure au moins un signal représentatif d'une espèce excitée dudit plasma au moyen d'un spectromètre d'émission optique.

6. Procédé selon l'une des revendications 1 à 5 **caractérisé en ce que**, l'échantillon à mesurer comprenant un empilement de couches minces, on modifie la concentration en oxygène du mélange gazeux au cours de l'exposition au plasma de décharge luminescente en fonction de la couche de l'empilement exposée audit plasma.

7. Procédé selon l'une des revendications 1 à 6 **caractérisé en ce que** ledit procédé comprend l'application simultanée d'un champ électrique radio-fréquence et d'un champ magnétique axial ou transverse par rapport à un axe de la lampe à décharge.

8. Procédé selon l'une des revendications 1 à 7 **caractérisé en ce que** ledit procédé comprend en outre une étape d'étalonnage selon laquelle:
- on place un échantillon organique de composition connue dans la lampe à décharge luminescente,
- on injecte dans la lampe à décharge un mélange gazeux comprenant au moins un gaz rare et de l'oxygène gazeux, la concentration en oxygène gazeux étant comprise entre 1% et 10% massique du mélange gazeux, on applique une décharge électrique de type radio-fréquence aux électrodes de ladite lampe à décharge pour générer un plasma de décharge luminescente, et on expose ledit échantillon organique de composition connue audit plasma ;
- on mesure la composition chimique élémentaire et/ou moléculaire de l'échantillon organique de composition connue par spectrornétrie d'émission optique ou spectrométrie de masse, en utilisant au moins un signal représentatif d'une espèce ionisée et/ou d'une espèce excitée dudit plasma confiné dans la lampe à décharge luminescente (2) ;
- on étalonne la mesure par spectrométrie d'émission optique ou spectrométrie de masse relativement à la composition connue dudit échantillon organique.

9. Application du procédé selon l'une des revendications 1 à 8 à un échantillon comprenant au moins une couche de matériau organique de type polymère.

10. Application du procédé selon la revendication 9 à un échantillon comprenant au moins une couche de matériau polymère organique de type polyéthylène téréphthalate.

## Patentansprüche

1. Verfahren zur Messung der elementaren und/oder molekularen chemischen Zusammensetzung einer wenigstens eine Schicht aus organischem Material (13; 33) aufweisenden festen Probe (3) mittels Glimmentladungsspektrometrie, das die folgenden Schritte aufweist:
- man platziert die Probe (3) in einer rohrförmigen Glimmentladungslampe (2),
- man leitet in die Entladungslampe (2) ein gasförmiges Gemisch ein, das wenigstens ein seltenes Gas und gasförmigen Sauerstoff aufweist, wobei die Konzentration des gasförmigen Sauerstoffs zwischen 1 Massen-% und 10 Massen-% der gasförmigen Mischung beträgt, man legt eine elektrische Entladung vom Hochfrequenztyp an die Elektroden der Entladungslampe an, um ein Glimmentladungsplasma zu erzeugen, wobei das Plasma im Inneren des Rohrs der Entladungslampe eingeschlossen bleibt, und man setzt die Schicht organischen Materials dem Plasma aus, um einen Erosionskrater in der Tiefe und eine Schreibgeschwindigkeit der organischen Schicht zu erhalten, die höher als die mit einem Glimmentladungsplasma mit dem seltenen Gas ohne Sauerstoff erzeugte Schreibgeschwindigkeit ist,
- man mißt die elementare und/oder molekulare chemische Zusammensetzung der wenigstens einen Schicht aus organischem Material (13; 33) der Probe (3) in Abhängigkeit von der Erosionstiefe in der Schicht organischen Materials (13, 33) mit einer submikronen Auflösungstiefe mittels eines optischen Emissionsspektrometers (4) oder eines Massenspektrometers (4), wobei das Spektrometer (4) wenigstens ein Signal verwendet, das für eine ionisierte Art und/oder eine angeregte Art des im Inneren des Rohrs der Glimmentladungslampe (2) eingeschlossenen Plasmas repräsentativ ist.

2. Verfahren zur Messung mittels Glimmentladungsspektrometrie gemäß Anspruch 1, **dadurch gekennzeichnet, daß** das wenigstens eine seltene Gas unter Argon, Neon, Helium oder einer Mischung dieser Gase ausgewählt ist.

3. Verfahren zur Messung mittels Glimmentladungsspektrometrie gemäß einem der Ansprüche 1 bis 2, **dadurch gekennzeichnet, daß** man eine elektrische Entladung vom gepulsten Hochfrequenztyp anlegt.

4. Verfahren zur Messung mittels Glimmentladungsspektrometrie gemäß einem der Ansprüche 1 bis 3, **dadurch gekennzeichnet, daß** man wenigstens ein Signal, das für eine ionisierte Art des Plasmas repräsentativ ist, mit einem Massenspektrometer mißt.

5. Verfahren zur Messung mittels Glimmentladungsspektrometrie gemäß einem der Ansprüche 1 bis 4, **dadurch gekennzeichnet, daß** man wenigstens ein Signal, das für eine angeregte Art des Plasmas repräsentativ ist, mit einem optischen Emissionsspektrometer mißt.

6. Verfahren gemäß einem der Ansprüche 1 bis 5, wobei die zu messende Probe eine Aufschichtung dünner Schlichten aufweist, **dadurch gekennzeichnet, daß** man die Konzentration an Sauerstoff in der gasförmigen Mischung im Verlaufe des dem Glimmentladungsplasma Aussetzens in Abhängigkeit von der dem Plasma ausgesetzten Schicht der Aufschichtung ändert.

7. Verfahren gemäß einem der Ansprüche 1 bis 6, **dadurch gekennzeichnet, daß** das Verfahren eine gleichzeitige Anwendung eines elektrischen Hochfrequenzfelds und eines zu einer Achse der Entladungslampe axialen oder transversalen Magnetfelds aufweist.

8. Verfahren gemäß einem der Ansprüche 1 bis 7, **dadurch gekennzeichnet, daß** das Verfahren außerdem einen Eichschritt aufweist, gemäß dem
- man eine organische Probe bekannter Zusammensetzung in die Glimmentladungslampe einbringt,
- man in die Entladungslampe ein gasförmiges Gemisch einleitet, das wenigstens ein seltenes Gas und gasförmigen Sauerstoff aufweist, wobei die Konzentration des gasförmigen Sauerstoffs zwischen 1 Massen-% und 10 Massen-% der gasförmigen Mischung beträgt, man eine elektrische Entladung vom Hochfrequenztyp an die Elektroden der Entladungslampe anlegt, um ein Glimmentladungsplasma zu erzeugern, und man die organische Probe dem Plasma aussetzt,
- man die elementare und/oder molekulare chemische Zusammensetzung der bekannten Probe (3) mittels optischer Emissionsspektrometrie oder Massenspektrometrie mißt, indem man wenigstens ein Signal verwendet, das für eine ionisierte Art und/oder eine angeregte Art des im Inneren des Rohrs der Glimmentladungslampe (2) eingeschlossenen Plasmas repräsentativ ist,
- man die Messung mittels optischer Emissionsspektrometrie oder Massenspektrometrie in Bezug auf die bekannte Zusammensetzung der organischen Probe eicht.

9. Anwendung des Verfahrens gemäß einem der Ansprüche 1 bis 8 auf eine Probe, die wenigstens eine Schicht organischen Materials vom Polymertyp aufweist.

10. Anwendung des Verfahrens gemäß Anspruch 9 auf eine Probe, die wenigstens eine Schicht organischen Polymermaterials vom Typ Polyäthylenterephthalat aufweist.

## Claims

1. A method of measurement by glow discharge spectrometry of the elementary and/or molecular chemical composition of a solid sample (3) comprising at least one layer of organic material (13, 33), comprising the following steps:
- placing said sample (3) in a tube-shaped glow discharge lamp (2);
- injecting into the discharge lamp (2) a gaseous mixture comprising at least one rare gas and gaseous oxygen, the concentration of gaseous oxygen being comprised between 1 and 10 mass % of the gaseous mixture, applying an electric discharge of the radiofrequency type to the electrodes of said discharge lamp to generate a glow discharge plasma, the plasma being confined inside the tube of said discharge lamp, and exposing said layer of organic material to said plasma so as to obtain a crater of erosion in depth and a speed of etching of the organic layer higher than the speed of etching produced by a glow discharge plasma in the presence of said rare gas with no oxygen;
- measuring the elementary and/or molecular chemical composition of said at least one layer of organic material (13, 33) of the sample (3) as a function of the depth of erosion in the layer of organic material (13, 33) with a submicron-resolution in depth by means of an optical emission spectrometer (4) or a mass spectrometer (4), the spectrometer (4) using at least one signal representative of an ionized species and/or an excited species of said plasma confined inside the tube of the glow discharge lamp (2).

2. The method of measurement by glow discharge spectrometry according to claim 1, **characterized in that** the at least one rare gas is chosen among argon, neon, helium or a mixture of said rare gases.

3. The method of measurement by glow discharge spectrometry according to one of claims 1 to 2, **characterized in that** an electric discharge of the pulsed radiofrequency type is applied.

4. The method of measurement by glow discharge spectrometry according to one of claims 1 to 3, **characterized in that** at least one signal representative of an ionized species of said plasma is measured by means of a mass spectrometer.

5. The method of measurement by glow discharge spectrometry according to one of claims 1 to 4, **characterized in that** at least one signal representative of an excited species of said plasma is measured by means of an optical emission spectrometer.

6. The method according to one of claims 1 to 5, **characterized in that**, the sample to be measured comprising a stack of thin layers, the concentration of oxygen in the gaseous mixture during the exposure to the glow discharge plasma is modified as a function of the layer of the stack that is exposed to said plasma.

7. The method according to one of claims 1 to 6, **characterized in that** said method comprises the simultaneous application of a radiofrequency electric field and a magnetic field that is axial or transverse with respect to an axis of the discharge lamp.

8. The method according to one of claims 1 to 7, **characterized in that** said method further comprises a calibration step in which:
- an organic sample of known composition is placed in the glow discharge lamp;
- a gaseous mixture comprising at least one rare gas and gaseous oxygen is injected into the discharge lamp, the concentration of gaseous oxygen being comprised between 1 and 10 mass % of the gaseous mixture, an electric discharge of the radiofrequency type is applied to the electrodes of said discharge lamp to generate a glow discharge plasma, and said organic sample of known composition is exposed to said plasma;
- the elementary and/or molecular chemical composition of the organic sample of known composition is measured by optical emission spectrometry or mass spectrometry, using at least one signal representative of an ionized species and/or an excited species of said plasma confined inside the glow discharge lamp (2);
- the measurement by optical emission spectrometry or mass spectrometry is calibrated with respect to the known composition of said organic sample.

9. Application of the method according to one of claims 1 to 8 to a sample comprising at least one layer of organic material of the polymer type.

10. Application of the method according to claim 9 to a sample comprising at least one layer of organic polymer material of the polyethylene terephthalate type.
